# EUROPÄISCHE PATENTSCHRIFT

(11) **EP 0 982 187 B1**
(45) Veröffentlichungstag und Bekanntmachung des Hinweises auf die Patenterteilung: **31.03.2004**
(21) Anmeldenummer: 99115383.4
(22) Anmeldetag: 04.08.1999
(51) Int. Cl.: B60N 2/48

(54) **Fahrzeugsitz mit einer Kopfstütze**
Vehicle seat with a headrest
Siège de véhicule avec un appui-tête

(30) Priorität: 24.08.1998 DE 19838317
(43) Veröffentlichungstag der Anmeldung: 01.03.2000
(73) Patentinhaber: GRAMMER AG, 92224 Amberg (DE)
(72) Erfinder: Meyer, Thomas, 92224 Amberg-Raigering (DE)
(74) Vertreter: LOUIS- PÖHLAU- LOHRENTZ

(56) Entgegenhaltungen:
- DE-A- 19 603 911
- DE-A- 19 628 861
- DE-A- 19 632 560
- DE-A- 19 714 283
- DE-U- 29 712 741

## Beschreibung

Die Erfindung betrifft einen Fahrzeugsitz mit einer Rückenlehne und einer Kopfstütze, die mittels einer Verbindungseinrichtung mit der Rückenlehne verbunden ist, wobei die Verbindungseinrichtung in einer in der Rückenlehne vorgesehenen Führungseinrichtung zur Höhenverstellung der Kopfstütze geführt ist, die Führungseinrichtung ein rückenlehnenfestes erstes Hülsenelement und ein in der Rückenlehne zwischen einer erhöhten Aktivstellung und einer abgesenkten Passivstellung verstellbares zweites Hülsenelement aufweist, zwischen welchem eine Federeinrichtung vorgesehen ist, das zweite Hülsenelement mittels eines freigebbaren Sperrorgans in der erhöhten Aktivstellung festgehalten wird, und das Sperrorgan durch eine Fernentriegelungseinrichtung und/oder durch Nachvorneklappen der Rückenlehne freigebbar ist.

Derartige Fahrzeugsitze sind allgemein bekannt. Bei diesen Fahrzeugsitzen kann es sich um die Vordersitze eines Fahrzeugs oder um die Fondsitze handeln.

Es ist immer wieder festzustellen, daß die Kopfstützen solcher Fahrzeugsitze nicht in die an den jeweiligen Sitzbenutzer anatomisch angepaßte Höhe eingestellt werden, sondern einfach an der Rückenlehne anliegen. Eine derartig eingestellte Kopfstütze trägt zur Sicherheit nichts bei, sondern sie verstärkt eher das Sicherheitsrisiko.

Handelt es sich bei einem solchen Fahrzeugsitz um einen Fahrzeugsitz im Fondbereich eines Fahrzeugs und ist die Kopfstütze relativ hoch eingestellt (95%-Mann-Position), so behindert die Kopfstütze die Sicht nach hinten, was unter Sicherheitsgesichtspunkten ebenfalls einen Mangel darstellt. Das gilt bei bekannten Fahrzeugsitzen selbst dann, wenn die Kopfstütze bspw. in der Höhe auf die sog. 5%-Frau eingestellt ist.

Aus der DE 196 32 560 C2 ist eine Kopfstützen-Arretiereinrichtung bekannt, die mit einem Verbindungselement zusammenwirkt, das eine höhenverstellbare Kopfstütze mit einer Rückenlehne eines Fahrzeugsitzes verbindet. Das Verbindungselement weist voneinander beabstandete Aussparungen und die Arretiereinrichtung weist ein in einem Gehäuse federnd vorgesehenes Rastorgan auf. Zwischen dem Gehäuse und dem Verbindungselement ist ein Zwischenelement vorgesehen. Zwischen dem Zwischenelement und dem Rastorgan ist ein Kupplungselement angeordnet, das in eine jeweilige Aussparung des Verbindungselementes mittels des Rastorganes federnd einrastbar und aus der jeweiligen Verbindungselement-Aussparung herausbewegbar ist. Das Verbindungselement ist mit dem Zwischenelement im eingerasteten Zustand des Kupplungselementes in bezug auf das Gehäuse der Arretiereinrichtung von einer durch das Rastorgan bestimmten Ausgangsposition nach unten und bis zur Ausgangsposition zurückverstellbar. Am Zwischenelement oder am Verbindungselement greift ein Antriebsorgan an, das bei einer Verschwenkung der Rückenlehne von ihrer jeweiligen Normalstellung in eine nach vorne geklappte Zutrittsstellung die Kopfstütze um eine bestimmte Strecke in Richtung zur Rückenlehne bewegt.

Ein Fahrzeugsitz der eingangs genannten Art ist aus der DE 196 28 861 A2 bekannt. Bei diesem bekannten Fahrzeugsitz ist die Federeinrichtung von einer Zugfeder gebildet. Eine solche Ausbildung weist den Mangel auf, daß die Federeigenschaften bei einem Bruch der Zugfeder nicht mehr gegeben sind, was bedeutet, daß dann die Funktionsweise der Kopfstütze bei diesem bekannten Fahrzeugsitz nicht mehr gegeben ist.

Der Erfindung liegt die Aufgabe zugrunde, einen Fahrzeugsitz der eingangs genannten Art zu schaffen, bei dem eine mögliche Funktionsuntüchtigkeit der Federeinrichtung nicht unbedingt zu einer Funktionsuntüchtigkeit der Kopfstütze, das heißt der jeweils richtigen Höheneinstellung der Kopfstütze führt.

Diese Aufgabe wird bei einem Fahrzeugsitz der eingangs genannten Art erfindungsgemäß dadurch gelöst, daß die Federeinrichtung von einer in der erhöhten Aktivstellung der Kopfstütze mechanisch gespannten Druckfeder gebildet ist.

Bei dem erfindungsgemäßen Fahrzeugsitz ist das Sperrorgan beispielsweise durch Nachvorneklappen der Rückenlehne bzw. durch eine Fernentriegelungseinrichtung, die beispielsweise am Armaturenbrett in Reichweite des Fahrzeuglenkers vorgesehen ist, freigebbar, um durch mechanische Entspannung der von einer Druckfeder gebildeten Federeinrichtung zwischen dem rückenlehnenfesten ersten Hülsenelement und dem zweiten Hülsenelement der Führungseinrichtung das zweite Hülsenelement und somit die mit dem zweiten Hülsenelement formschlüssig verbundene Kopfstütze zur Rückenlehne hin derartig abzusenken, daß die Kopfstütze die Sicht des Fahrzeuglenkers nach rückwärts nicht beeinträchtigt.

Dadurch, dass die Federeinrichtung von einer Druckfeder gebildet ist, ergibt sich der Vorteil, daß die Verstellbarkeit der Kopfstütze auch bei einem nicht absolut vermeidbaren Bruch der Druckfeder zumindest zeitlich begrenzt gewährleistet bleibt, so dass es möglich ist, die Zeit bis zu einem Ersatz einer gebrochenen Druckfeder funktionstüchtig zu überbrücken.

Erfindungsgemäß ist die Kopfstütze in der abgesenkten Passivstellung des zweiten Hülsenelementes an der Rückenlehne zweckmäßigerweise derartig angeordnet, daß sie sich mit ihrer Vorderkontur bezüglich des Sitzkomforts störend bemerkbar macht. Auf diese Weise wird erreicht, daß der jeweils auf dem Fahrzeugsitz Platz nehmende Sitzbenutzer zur Verbesserung seines Sitzkomforts die Kopfstütze wieder aus der abgesenkten Passivstellung von der Rückenlehne weg anheben wird. Konstruktionsbedingt kann es hierbei erforderlich sein, die Kopfstütze zuerst in ihre maximale Höhenposition (95%-Mann) zu verstellen und dann durch Betätigung eines an der Kopfstütze vorgesehenen Betätigungsorgans die Kopfstütze wieder geeignet bzw. bis zu einer minimalen Aktivstellung (5%-Frau) abzusenken, um die Kopfstütze an die anatomischen Gegebenheiten des jeweiligen Sitzbenutzers geeignet anzupassen. Das Absenken der Kopfstütze zwischen der 95%-Mann-Position und der 5%-Frau-Position ist nur durch Betätigung des besagten Betätigungsorgans an der Kopfstütze möglich, während eine schrittweise Anhebung der Kopfstütze von der 5%-Frau-Position zur 95%-Mann-Position einfach durch Hochheben der Kopfstütze möglich ist.

Wird die Kopfstütze - wie ausgeführt worden ist - von der an der Rückenlehne eng anliegenden, abgesenkten Passivstellung des zweiten Hülsenelementes in die maximale erhöhte Aktivstellung (95%-Mann-Position) hochgehoben, so wird das Sperrorgan automatisch wieder mit dem zweiten Hülsenelement der Führungseinrichtung verriegelt und die Federeinrichtung zwischen dem ersten und dem zweiten Hülsenelement wieder - bis zu einer erneuten Betätigung des freigebbaren Sperrorgans - zwischen dem ersten und dem zweiten Hülsenelement im mechanisch gespannten Zustand gehalten.

Bei einer Freigabe des Sperrorgans mit Hilfe der Federeinrichtung zwischen dem ersten und dem zweiten Hülsenelement der Führungseinrichtung wird die Kopfstütze automatisch in eine tiefe Passivstellung abgesenkt, in welcher die Sicht nach rückwärts durch die Kopfstütze nicht beeinträchtigt wird. In dieser abgesenkten Passivstellung sorgt die Vorderkontur der Kopfstütze dafür, daß ein auf dem Fahrzeugsitz Platz nehmender Sitzbenutzer durch die Vorderkontur der Kopfstütze derartig in seinem Sitzkomfort beeinträchtigt wird, daß er die Kopfstütze aus der Rückenlehne herausziehen wird, bis das Sperrorgan wieder mit dem zweiten Hülsenelement der Führungseinrichtung verrastet und die Federeinrichtung zwischen dem ersten und dem zweiten Hülsenelement der Führungseinrichtung mechanisch gespannt wird. Danach kann der Sitzbenutzer dann die Kopfstütze im Bedarfsfall geeignet absenken, d.h. in der Höhe an seine anatomischen Gegebenheiten anpassen.

Weitere Einzelheiten und Vorteile ergeben sich aus der nachfolgenden Beschreibung eines in der Zeichnung dargestellten Ausführungsbeispieles des erfindungsgemäßen Fahrzeugsitzes bzw. wesentlicher Einzelheiten desselben.
Es zeigen:
- Fig. 1: abschnittsweise in einer Schnittdarstellung die Rückenlehne und die Kopfstütze des Fahrzeugsitzes sowie die Verbindungseinrichtung, mit welcher die Kopfstütze mit der Rückenlehne verbunden ist, und
- Fig. 2: schematisch teilweise aufgeschnitten in einer Seitenansicht die Rückenlehne und die Kopfstütze des erfindungsgemäßen Fahrzeugsitzes, wobei die Kopfstütze in drei unterschiedlichen Höhenpositionen verdeutlicht ist.

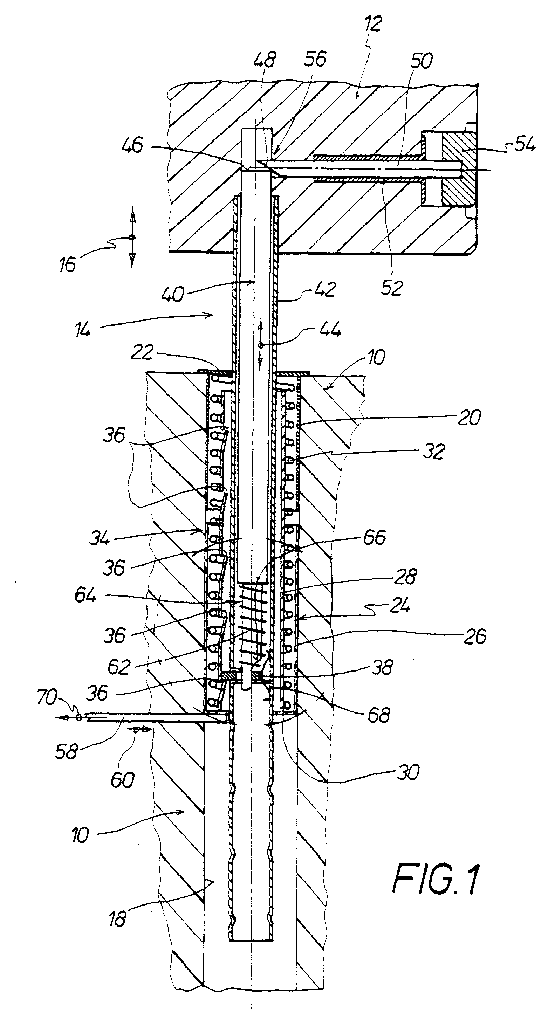

Fig. 1 zeigt abschnittweise längsgeschnitten eine Rückenlehne 10 eines Fahrzeugsitzes, die mit einer ebenfalls nur abschnittweise und geschnitten gezeichneten Kopfstütze 12 mittels einer Verbindungseinrichtung 14 höhenverstellbar verbunden ist. Das ist in Fig.1 durch den Doppelpfeil 16 angedeutet.

Die Rückenlehne 10 weist eine Aussparung 18 auf, in welcher ein erstes Hülsenelement 20 festgelegt ist. Das erste Hülsenelement 20 ist oberseitig mit einem Ring 22 versehen.

In der Aussparung 18 ist ein zweites Hülsenelement 24 vorgesehen, das eine Außenhülse 26, eine Innenhülse 28 und einen Bodenring 30 aufweist. Die Außenhülse 26 des zweiten Hülsenelementes 24 und das erste Hülsenelement 20 weisen die gleichen Umfangsabmessungen auf. Das zweite Hülsenelement 24 ist in der Aussparung 18 linear beweglich angeordnet. Zwischen dem ersten Hülsenelement 20 und dem zweiten Hülsenelement 24 ist eine Federeinrichtung 32 vorgesehen, die mit ihrem einen Ende am Ring 22 des ersten Hülsenelementes 20 und die mit ihrem anderen Ende am Bodenring 30 des zweiten Hülsenelementes 24 anliegt bzw. zwischen diesen mechanisch gespannt angeordnet ist.

Das erste Hülsenelement 20 und das zweite Hülsenelement 24 bilden für die Verbindungseinrichtung 14 eine Führungseinrichtung 34. Die Innenhülse 28 des zweiten Hülsenelementes 24 der Führungseinrichtung 34 ist mit voneinander beabstandeten Raststufen 36 für ein Rastorgan 38 ausgebildet.

Die Verbindungseinrichtung 14 weist ein Stangenelement 40 und ein das Stangenelement 40 umschließendes Hülsenelement 42 auf. Das Hülsenelement 42 ist mit der Kopfstütze 12 fest verbunden. Das Stangenelement 40 ist in der Kopfstütze 12 und im Hülsenelement 42 linear begrenzt beweglich, was durch den Doppelpfeil 44 angedeutet ist. Das Stangenelement 40 liegt mit seinem oberseitigen Ende 46 an einer Keilfläche 48 einer Betätigungsstange 50 an, die sich durch eine in der Kopfstütze 12 vorgesehene Hülse 52 hindurcherstreckt. An dem von der Keilfläche 48 entfernten Endabschnitt der Betätigungsstange 50 ist ein Betätigungs- bzw. Druckknopf 54 befestigt. Die Betätigungsstange 50 mit dem Betätigungs- bzw. Druckknopf 54 und der Keilfläche 48 bildet ein an der Kopfstütze 12 vorgesehenes Betätigungsorgan 56.

In die in der Rückenlehne 10 ausgebildete Aussparung 18 erstreckt sich in Querrichtung ein freigebbares Sperrorgan 58 hinein. Befindet sich die Kopfstütze 12 in ihrer maximalen Höhenposition, d.h. in ihrer von der Rückenlehne 10 am weitesten entfernten Höhenposition (95%-Mann-Position), so befindet sich die Innenhülse 28 des zweiten Hülsenelementes 24 der Führungseinrichtung 34 mit dem Bodenring 30 über dem Sperrorgan 58, so daß dieses federnd in die Aussparung 18 hineingezwängt wird. Das ist durch den Pfeil 60 angedeutet. In dieser Stellung wird also das zweite Hülsenelement 24 in der in Fig. 1 gezeichneten erhöhten Aktivstellung festgehalten, in der die zwischen dem ersten und dem zweiten Hülsenelement 20 und 24 vorgesehene Federeinrichtung 32 mechanisch gespannt ist. In dieser erhöhten Aktivstellung kann die Kopfstütze 12 durch Betätigung des Betätigungsorganes 56, d.h. durch einen Druck auf den Betätigungs- bzw. Druckknopf 54 zwischen der 95%-Mann-Position und der 5%-Frau-Position von oben nach unten verstellt werden. Eine Verstellung der Kopfstütze 12 von unten nach oben kann auch ohne Betätigung des Betätigungsorganes 56 erfolgen. Wird der Druckknopf 54 des Betätigungsorganes 56 an der Kopfstütze 12 gedrückt, so wird nämlich das Stangenelement 40 nach unten bewegt. Hierbei wird ein Federelement 62 am unteren Endabschnitt 64 des Stangenelementes 40 mechanisch gespannt, das Rastorgan 38 an einem Keilrücken 66 des unteren Endabschnittes 64 von der jeweiligen Raststufe 36 weg - in Fig. 1 nach rechts - bewegt und hierbei ein Blattfederelement 68 gespannt. Durch die Bewegung des Rastorganes 38 von der jeweiligen Raststufe 36 weg kann die Kopfstütze 12 - wie ausgeführt worden ist - von der 95%-Mann-Position zur 5%-Frau-Position wunschgemäß verstellt, d.h. abgesenkt werden. Bei Erreichen der passenden Höhenposition der Kopfstütze 12 wird der Betätigungs- bzw. Druckknopf 54 losgelassen, so daß sich sowohl das Federelement 62 als auch das Blattfederelement 68 wieder entspannen können. Der Betätigungs- bzw. Druckknopf 54 wird in seine inaktive Ruheposition und das Rastorgan 38 wird federnd in eine Rastposition zurückverstellt, in der es an der jeweiligen Raststufe 36 zur Anlage kommt. Von der 5%-Frau-Position zur 95%-Mann-Position kann die Kopfstütze 12 ohne Betätigung des Betätigungs- bzw. Druckknopfes 54 verstellt werden, weil die Raststufen 36 für das Rastorgan 38 eine federnd nachgiebige Rasterung darstellen.

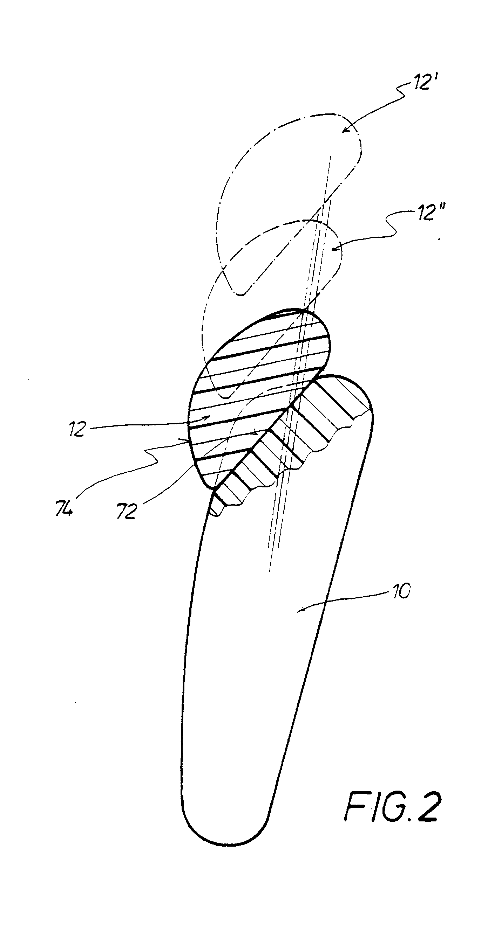

Die 95%-Mann-Position der Kopfstütze ist in Fig. 2 mit dünnen strichpunktierten Linien dargestellt und durch die Bezugsziffer 12' verdeutlicht. Die 5%-Frau-Position der Kopfstütze ist in Fig. 2 mit dünnen strichlierten Linien verdeutlicht und durch die Bezugsziffer 12" angedeutet.

Wenn auf dem Fahrzeugsitz kein Sitzbenutzer sitzt, kann das Sperrorgan 58 durch eine (nicht gezeichnete) Fernentriegelungseinrichtung und/oder durch Nachvorneklappen der Rückenlehne 10 freigebbar sein. Diese Freigabe ist in Fig.1 durch den Pfeil 70 angedeutet. Durch die Freigabe (Pfeil 70) des Sperrorganes 58 kann sich die Federeinrichtung 32 zwischen dem ersten und dem zweiten Hülsenelement 20 und 24 mechanisch entspannen, so daß sich das zweite Hülsenelement 24 in die Aussparung 18 in der Rückenlehne 10 hineinbewegt. Dabei nimmt das zweite Hülsenelement 24 durch die federnde Verrastung des Rastorganes 38 mit der jeweiligen Raststufe 36 des zweiten Hülsenelementes 24 die Verbindungseinrichtung 14 und somit die Kopfstütze 12 in eine abgesenkte Passivstellung mit. Diese abgesenkte Passivstellung der Kopfstütze ist in Fig. 2 mit durchgezogenen dicken Linien geschnitten dargestellt und mit der Bezugsziffer 12 bezeichnet. In dieser abgesenkten Passivstellung liegt die Kopfstütze 12 in einer Ausnehmung 72 in der Rückenlehne 10 derartig an, daß sich die Vorderkontur 74 der Kopfstütze 12 bezüglich des Sitzkomforts an der Rückenlehne 10 störend bemerkbar macht. Nimmt also am entsprechenden Fahrzeugsitz ein Sitzbenutzer Platz, so wird er die sich störend in der abgesenkten Passivstellung bemerkbar machende Kopfstütze 12 von der Rückenlehne 10 weg nach oben zuerst bis in die 95%-Mann-Position verstellen, was unter Sicherheitsgesichtspunkten vorteilhaft ist.

## Patentansprüche

1. Fahrzeugsitz mit einer Rückenlehne (10) und einer Kopfstütze (12), die mittels einer Verbindungseinrichtung (14) mit der Rückenlehne (10) verbunden ist, wobei die Verbindungseinrichtung (14) in einer in der Rückenlehne (10) vorgesehenen Führungseinrichtung (34) zur Höheneinstellung der Kopfstütze (12) geführt ist, die Führungseinrichtung(34) ein rückenlehnenfestes erstes Hülsenelement (20) und ein in der Rückenlehne (10) zwischen einer erhöhten Aktivstellung und einer abgesenkten Passivstellung verstellbares zweites Hülsenelement (24) aufweist, zwischen welchem eine Federeinrichtung (32) vorgesehen ist, das zweite Hülsenelement (24) mittels eines freigebbaren Sperrorgans (58) in der erhöhten Aktivstellung festgehalten wird, und das Sperrorgan (58) durch eine Fernentriegelungseinrichtung und/oder durch Nachvorneklappen der Rückenlehne (10) freigebbar ist,
**dadurch gekennzeichnet,**
**daß** die Federeinrichtung (32) von einer in der erhöhten Aktivstellung der Kopfstütze (12) mechanisch gespannten Druckfeder gebildet ist.

2. Fahrzeugsitz nach Anspruch 1,
**dadurch gekennzeichnet,**
**daß** die Kopfstütze (12) in der abgesenkten Passivstellung des zweiten Hülsenelementes (24) an der Rückenlehne (10) derartig angeordnet ist, daß sie sich mit ihrer Vorderkontur (74) bezüglich des Sitzkomforts störend bemerkbar macht.

## Claims

1. Vehicle seat having a backrest (10) and a head restraint (12) which is connected to the backrest (10) by means of a connecting device (14), the connecting device (14) being guided, for the purpose of adjusting the height of the head restraint (12), in a guide device (34) provided in the backrest (10), the guide device (34) having a first sleeve element (20) which is fixed on the backrest and a second sleeve element (24) which can be adjusted in the backrest (10) between a raised active position and a lowered passive position and between which a spring device (32) is provided, the second sleeve element (24) being secured in the raised active position by means of a releasable blocking element (58), and the blocking element (58) being releasable by a remote-unlocking device and/or by the backrest (10) being folded forwards, **characterized in that** the spring device (32) is formed by a compression spring which is clamped mechanically in the raised active position of the head restraint (12).

2. Vehicle seat according to Claim 1, **characterized in that** the head restraint (12) is arranged in the lowered passive position of the second sleeve element (24) on the backrest (10) in such a manner that its front contour (74) becomes noticeably annoying in terms of the seat comfort.

## Revendications

1. Siège de véhicule, du type comprenant un dossier (10) et un appui-tête (12) qui est réuni au dossier (10) par un système de liaison (14), le système de liaison (14) étant guidé dans un système de guidage (34) prévu dans le dossier (10) en vue du réglage en hauteur de l'appui-tête (12), le système de guidage (34) présentant un premier élément en forme de douille (20) solidaire du dossier et un second élément en forme de douille (24) réglable entre une position haute active et une position basse passive, entre lesquelles est prévu un système à ressort (32), le second élément en forme de douille (24) étant maintenu en position active haute par un organe de blocage libérable (58) et l'organe de blocage (58) étant libérable par un système de déverrouillage à distance et/ou par rabattage vers l'avant du dossier, siège **caractérisé en ce que** le système à ressort (32) est constitué par un ressort de compression bandé mécaniquement dans la position active haute de l'appui-tête (12).

2. Siège de véhicule selon la revendication 1, **caractérisé en ce que** l'appui-tête est monté sur le dossier (10) dans la position passive basse du second élément en forme de douille (24), d'une manière telle que, par son contour avant, il perturbe de façon remarquable le confort du siège.
